# DEMANDE DE BREVET EUROPEEN

(11) **EP 2 237 243 A1**
(43) Date de publication de la demande: **06.10.2010**
(21) Numéro de dépôt: 10157189.1
(22) Date de dépôt: 22.03.2010
(51) Int. Cl.: G09B 21/00, G06F 17/28

(54) **Procédé de traduction contextuelle d'une page électronique en langue des signes et dispositif correspondant**

(30) Priorité: 30.03.2009 FR 0951978
(71) Demandeur: France Telecom, 75015 Paris (FR)
(72) Inventeur: Deuff, Dominique, 22560 Trebeurden (FR); Thunin, Olivier, 22700 Louannec (FR)

(57) **Abrégé**

L'invention concerne un procédé de traduction d'une zone de page électronique en langue des signes, comportant une étape d'obtention (E3) d'une vidéo en langue des signes correspondant à ladite zone, **caractérisé en ce que** ladite étape d'obtention (E3) d'une vidéo est précédée d'une étape d'obtention (E1) d'au moins une donnée associée à ladite zone, ladite zone ayant été détectée en fonction de mouvements d'un curseur.

## Description

La présente invention se rapporte de manière générale au domaine des télécommunications, et plus précisément à l'accessibilité des pages web pour les personnes présentant un handicap, par exemple les personnes atteintes de surdité profonde, illettrées mais comprenant la langue des signes.

Pour permettre à ces personnes l'accès à une page web, une traduction de cette page en langue des signes est nécessaire. Les techniques actuelles de traduction de pages électroniques utilisent des vidéos d'interprètes en langue des signes. Par exemple, la vidéo correspondant à la traduction d'une page web ou d'une partie de cette page est mise en ligne, sur le site de la page web.

Cette technique a l'inconvénient d'être coûteuse et de rendre difficile la concordance entre une traduction signée d'une page web et une éventuelle mise à jour de cette page web, car il faut alors procéder à un réenregistrement complet de la vidéo. De plus elle ne permet pas un accès contextuel à l'ensemble des informations textuelles présentées au fil de cette page web lorsqu'on la consulte: les éléments écrits dans la page et les informations communiquées en langue des signes dans sa traduction ne sont pas mises en correspondance, ce qui oblige l'utilisateur à faire un effort pour interpréter chaque partie du texte par rapport à ce qui a pu en être dit dans la vidéo de sa traduction. Cela lui rend difficile la compréhension de la structure de la page, ainsi que l'identification des différentes fonctions de cette page, ainsi que les actions qui lui sont offertes, par exemple en activant des liens hypertexte.

La demande US2002/0032702 présente un dispositif de traduction automatique en langue des signes, d'un texte que l'on enregistre dans la mémoire de ce dispositif, avant de lancer une traduction automatique de ce texte, utilisant une banque d'images prédéterminées correspondant à des mots ou des expressions. Ce dispositif présente l'avantage de faciliter la mise en ligne de traductions de pages web et de leurs mises à jour, mais ne permet pas une traduction contextuelle de ces pages web.

Un des buts de l'invention est de remédier à au moins une partie des inconvénients de la technique antérieure, en fournissant un procédé et un dispositif de traduction de page électronique, permettant de traduire une page électronique contextuellement à la navigation d'un utilisateur sur cette page.

A cette fin, l'invention propose un procédé de traduction d'une zone de page électronique en langue des signes, comportant une étape d'obtention d'une vidéo en langue des signes correspondant à ladite zone,
**caractérisé en ce que** ladite étape d'obtention d'une vidéo est précédée d'une étape d'obtention d'au moins une donnée associée à ladite zone, ladite zone ayant été détectée en fonction de mouvements d'un curseur.

Ladite au moins une donnée associée à ladite zone est par exemple un identifiant de cette zone, ou un texte à traduire associé à cette zone, cette donnée devant permettre à un dispositif implémentant l'invention, d'obtenir un texte à traduire en relation avec cette zone.

Grâce à l'invention, seules des zones de la page électronique sont traduites au fur et à mesure de la navigation d'un utilisateur sur cette page, ce qui permet de lui offrir une traduction contextuelle. Une zone de cette page électronique correspond à une zone à traduire qui n'est pas forcément du texte mais est par exemple une image, à laquelle est associé un commentaire sur la page électronique. De plus cette traduction contextuelle ne nécessite pas d'action particulière de l'utilisateur, et est donc adaptée à une personne illettrée, puisque le besoin de l'utilisateur de traduire une zone de la page électronique est détecté automatiquement par les mouvements du curseur que manipule l'utilisateur. Ainsi par le simple fait de surligner cette zone, ou encore par un passage ou une immobilisation prolongée du curseur sur cette zone, la traduction de celle-ci est lancée automatiquement. Enfin ce procédé présente l'avantage d'être transparent pour un utilisateur navigant sans traduction sur une page web, le procédé ne nécessitant pas d'insérer des hyperliens ou des boutons d'actions spécifiques sur cette page web pour lancer la traduction d'une zone de cette page. Il est en effet possible d'implémenter le procédé selon l'invention en totalité ou en partie dans un navigateur spécifique d'un terminal de l'utilisateur, le procédé de traduction selon l'invention étant alors activé par ce navigateur spécifique.

Selon une caractéristique avantageuse du procédé de traduction selon l'invention, ladite zone est détectée par des mouvements répétés dudit curseur au dessus de ladite zone, ou par une immobilisation dudit curseur pendant au moins une durée prédéterminée au dessus ou à proximité de ladite zone.

Ce mode de détection a l'avantage d'être intuitif pour un utilisateur. En effet, celui-ci a naturellement tendance à positionner le curseur au dessus ou à proximité d'un paragraphe ou d'un bout de paragraphe qui l'intrigue, par exemple sur la ligne immédiatement inférieure. En variante, une zone à traduire est détectée lorsque le curseur effectue des mouvements prédéterminés. Cependant cette variante nécessite un apprentissage de la part de l'utilisateur.

Selon une autre caractéristique avantageuse, ladite étape d'obtention d'au moins une donnée est précédée d'une étape d'activation dudit procédé de traduction, utilisant la détection d'au moins un mouvement prédéterminé dudit curseur ou l'activation d'un objet graphique sur ladite page électronique.

Cette caractéristique permet, lorsque le procédé de traduction selon l'invention est implémenté par exemple sur une borne d'accès publique à un site web, de ne lancer une traduction contextuelle de zones d'une page web que pour les utilisateurs le souhaitant. Par exemple une petite vidéo en langue des signes dans un coin de la page web invitera un utilisateur à lancer une telle traduction par un clic sur cette vidéo ou sur un autre bouton d'action.

Selon une autre caractéristique avantageuse, ladite étape d'obtention d'une vidéo est précédée d'une étape de traduction dynamique en langue des signes d'un texte associé à ladite zone, ladite étape de traduction résultant en un ensemble de signes, et ladite vidéo étant construite dynamiquement lors de ladite étape d'obtention d'une vidéo par concaténation d'images prédéterminées, ladite concaténation formant visuellement ledit ensemble de signes.

Cette traduction dynamique permet de ne pas stocker pour des zones pré-identifiées de la page web, des vidéos de traduction, ce qui serait très coûteux en place mémoire. Cette traduction dynamique utilise par exemple l'animation d'un avatar, dont les mouvements pour chaque mot ou chaque expression à traduire sont prédéterminés et stockés en mémoire du dispositif implémentant l'invention. Ainsi différents avatars sont utilisables sans mettre à jour ces mouvements.

Selon une autre caractéristique avantageuse, lorsque le procédé de traduction selon l'invention est implémenté dans un serveur web distant d'un terminal associé audit curseur, ladite étape d'obtention d'au moins une donnée est précédée d'une étape d'envoi de ladite page électronique audit terminal, ladite page électronique comportant des instructions de code aptes à faire détecter sur ledit terminal ladite zone en fonction de mouvements dudit curseur, et à envoyer audit serveur web ladite au moins une donnée, et ladite étape d'obtention d'une vidéo est suivie d'une étape d'envoi de ladite vidéo audit terminal.

Cette implémentation dans un serveur web distant permet d'utiliser le procédé de traduction selon l'invention depuis un terminal non propriétaire. Avec cette implémentation, il suffit par exemple que le terminal ait un navigateur compatible avec Flash® ou encore avec JavaScript®, c'est-à-dire capable d'exécuter des instructions de code insérées dans une page électronique, pour utiliser le procédé de traduction selon l'invention.

L'invention concerne aussi un dispositif comportant des moyens de traduction d'une zone d'une page électronique en langue des signes, et des moyens d'obtention d'une vidéo en langue des signes correspondant à ladite zone, **caractérisé en ce qu**'il comporte en outre des moyens d'obtention d'au moins une donnée associée à ladite zone, utilisant des moyens de détection de ladite zone en fonction de mouvements d'un curseur sur un écran d'un terminal affichant ladite page électronique.

Le dispositif selon l'invention est par exemple un terminal spécifique, ou un serveur web. Dans ce dernier cas, les moyens de détection sont des instructions de code aptes à faire détecter sur un terminal une zone de page électronique en fonction de mouvements d'un curseur de ce terminal, en supposant que ce terminal ait un navigateur capable d'exécuter ces instructions.

L'invention concerne enfin un programme d'ordinateur comportant des instructions pour mettre en oeuvre le procédé de traduction selon l'invention, lorsqu'il est exécuté sur un ordinateur.

Le dispositif selon l'invention, ainsi que le programme d'ordinateur selon l'invention, présentent des avantages analogues à ceux du procédé de traduction selon l'invention.

D'autres caractéristiques et avantages apparaîtront à la lecture de modes de réalisation préférés décrits en référence aux figures dans lesquelles:
- la figure 1 représente un écran de terminal sur lequel est affichée une page électronique sur laquelle le procédé de traduction selon l'invention est utilisé,
- la figure 2 représente des étapes du procédé de traduction selon l'invention, dans un premier mode de réalisation de l'invention,
- la figure 3 représente un serveur web implémentant le procédé de traduction selon l'invention dans un deuxième mode de réalisation de l'invention,
- et la figure 4 représente des étapes du procédé de traduction selon l'invention, dans ce deuxième mode de réalisation de l'invention.

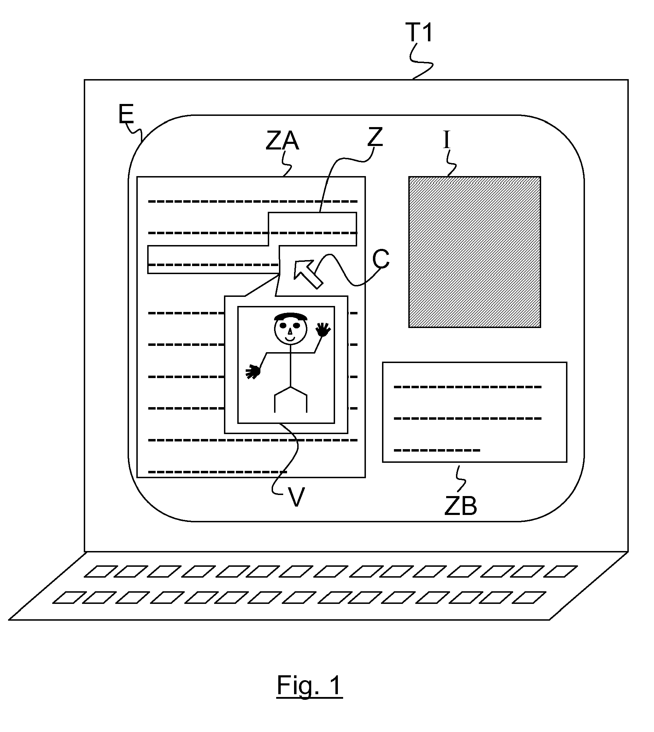

Selon un premier mode de réalisation de l'invention, le procédé de traduction selon l'invention est implémenté de manière logicielle dans un terminal T1 représenté à la **figure 1**. Ce terminal T1 est, dans ce mode de réalisation de l'invention, un ordinateur personnel, mais il est également envisageable d'implémenter le procédé de traduction selon l'invention dans tout type de terminal intégrant un navigateur permettant de consulter une page électronique, par exemple un terminal mobile ou un assistant numérique personnel de type PDA (d'après l'anglais "Personal Digital Assistant").

Le navigateur du terminal T1 intègre un module spécifique détectant les mouvements d'un curseur C du terminal T1, ce module s'interfaçant à un module de traduction automatique d'un texte en langue des signes. Cette traduction s'effectue grâce à une banque de données associant des paramètres de mouvements prédéterminés à des mots, et à un module d'animation d'un avatar apte à recevoir en entrée de tels paramètres de mouvements.

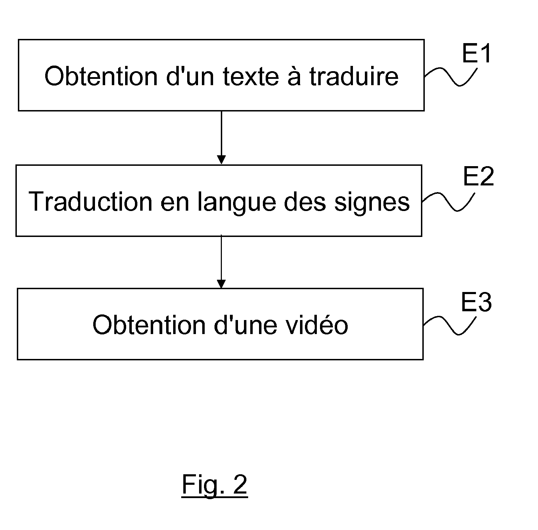

On suppose maintenant, dans ce mode de réalisation de l'invention, qu'un utilisateur du terminal T1 navigue sur une page électronique locale ou distante. Cette page est affichée à l'écran E du terminal T1, et représentée à la **figure 1****.** Elle est structurée, dans cet exemple d'utilisation de l'invention, en une zone de texte ZA sur la moitié gauche de cette page, en une image I sur son quart supérieur droit et en une autre zone de texte ZB sur son quart inférieur droit. On suppose de plus que l'utilisateur du terminal T1 entre une commande prédéterminée dans son navigateur, déclenchant la mise en oeuvre du procédé selon l'invention, se déroulant en trois étapes représentées à la **figure 2****.**

L'étape E1 est l'obtention d'un texte associé à une zone à traduire sur la page électronique affichée à l'écran E du terminal T1. Cette étape est effectuée par le navigateur du terminal T1, qui détecte des passages surlignés par l'utilisateur, des immobilisations prolongées du curseur C au dessus ou à proximité d'une zone de texte ou d'un paragraphe, ou encore des mouvements répétés du curseur C au dessus d'un passage d'un texte, d'un paragraphe ou d'une zone de texte. Par exemple si le curseur C est immobilisé plus d'une période de temps donnée, par exemple cinq secondes, sur la page électronique en dehors d'une zone de texte, on détecte la zone de texte la plus proche du curseur C, ou si le curseur C est immobilisé plus de cinq secondes sur une zone de texte, on détecte le paragraphe le plus proche du curseur C dans cette zone de texte. En variante, dans cette étape E1, on ne détecte pas de zone de texte lorsque le curseur C est immobilisé en dehors d'une zone de texte de la page électronique, mais seulement dans les autres cas tels qu'une immobilisation du curseur C au dessus d'une zone de texte ou des mouvements répétés du curseur C sur cette zone de texte. Cette variante a l'avantage d'éliminer de fausses détections d'intentions de traduction.

Dans cet exemple d'utilisation de l'invention, on suppose que l'utilisateur du terminal T1 surligne un passage de la zone de texte ZA, et que le navigateur détecte une zone Z correspondante à traduire, comme représenté sur la **figure 1**. Le texte à traduire identifié dans cette étape E1 est donc celui inclus dans la zone Z.

L'étape E2 est la traduction en langue des signes du texte contenu dans cette zone Z. Pour cela, le navigateur du terminal T1 envoie ce texte au module de traduction automatique du terminal T1. Ce module est un module d'analyse et de synthèse automatique qui assure la traduction d'un texte écrit en langue des signes sous la forme d'un avatar en images de synthèse signant le texte traduit. Un exemple de réalisation d'un tel module est décrit dans l'article de L. Kervajan et G. Breton, intitulé "Du texte en français à l'avatar signant", publié à l'occasion de la conférence internationale TALN ("Traitement Automatique des Langues Naturelles") de juin 2007

L'étape E3 est l'obtention d'une vidéo V en langue des signes correspondant à la traduction du texte identifié à l'étape E1. Cette vidéo V est produite dynamiquement en parallèle à l'étape E2 de traduction. En effet, le module de traduction automatique envoie au fur et à mesure de la traduction du texte, des mouvements prédéterminés correspondant aux mots ou expressions contenus dans ce texte, en entrée du module d'animation d'un avatar intégré au module de traduction automatique. Ainsi, le module de traduction, à partir du texte reçu en entrée, produit une vidéo V représentant le texte traduit en langue des signes. Cette vidéo V est affichée dans une bulle de commentaire en surimpression de la page électronique, cette bulle pointant sur la zone Z détectée à l'étape E1.

Bien sûr, des variantes de réalisation de ce premier mode de réalisation sont envisageables. Par exemple dans une variante de ce mode de réalisation de l'invention, l'affichage d'une vidéo de traduction d'une zone à traduire se fait dans une fenêtre recouvrant tout l'écran, cette fenêtre disparaissant à la fin de la vidéo. Dans une autre variante de ce mode de réalisation de l'invention, la traduction automatique n'utilise pas l'animation d'un avatar, mais la concaténation de prises de vue prédéterminées formant visuellement un ensemble de signes correspondant à la traduction du texte compris dans la zone à traduire. Dans cette dernière variante, les prises de vue prédéterminées sont stockées dans une base de données du terminal T1, cette base permettant d'associer à un mot ou à une expression, un ensemble de prises de vue d'un interprète signant ce mot ou cette expression. Enfin, dans une variante de l'étape E1, le texte à traduire associé à la zone détectée par le navigateur du terminal T1 ne correspond pas à un texte affiché dans cette zone détectée, mais à un texte non affiché inclus dans une balise HTML spécifique de la page électronique. Si la zone détectée comporte une image, ce texte est par exemple un commentaire associé à cette image.

Il est d'ailleurs à noter qu'au sens de l'invention, le terme "traduction" est à comprendre au sens large: en effet l'invention permet d'offrir à un utilisateur visualisant une page électronique sur un écran d'un terminal, plus qu'une traduction littérale en langue des signes de textes affichés sur cet écran, mais également une traduction en langue des signes de commentaires non affichés et associés à des zones de la page électronique. Il s'agit par exemple de commentaires explicatifs d'images.

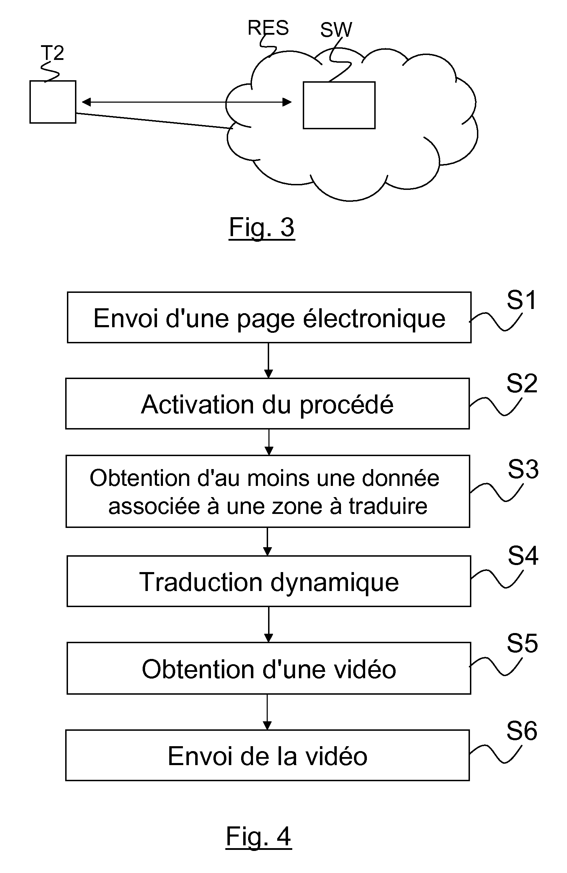

Selon un deuxième mode de réalisation de l'invention, le procédé de traduction selon l'invention est implémenté de manière logicielle dans un serveur web SW représenté à la **figure 3****.** Ce serveur web SW est connecté à un réseau de communication RES de type Internet, auquel est connecté un terminal T2. On suppose que le serveur web SW héberge des pages électroniques dans lesquelles sont insérées des instructions de code aptes:
- à faire détecter sur un navigateur exécutant ces instructions, une zone de page électronique, en fonction de mouvements d'un curseur de ce terminal,
- et à faire envoyer par ce navigateur au serveur web SW, au moins une donnée associée à cette zone, par exemple des numéros de lignes et de colonnes permettant d'identifier une position de départ de la zone et une position de fin de la zone, ou encore un texte à traduire associé à cette zone.

Ces instructions de code sont par exemple écrites dans un langage de script de type JavaScript® ou utilisent un langage d'interface interactive riche ou RIA (d'après l'anglais "Rich Internet Applications") telle que le langage Flex®.

De plus, dans une de ces pages électroniques, les données associées à des zones à traduire et qui sont destinées à être envoyées au serveur web SW sont par exemple contenues dans des balises HTML de cette page, ces balises étant dédiées à l'accessibilité des pages web par des personnes nécessitant une traduction de cette page en langue des signes. De telles balises sont notamment utiles lorsque les données à envoyer pour une zone donnée d'une page électronique forment un texte qui n'est pas reproduit à l'écran lors de l'affichage de cette page électronique. Ce texte est par exemple un commentaire associé à une image incluse dans la zone à traduire.

Par exemple, des balises HTML spécifiques utilisables sont celles préconisées par les directives WCAG (d'après l'anglais "Web Content Accessibility Guidelines") de l'organisme de normalisation W3C (d'après l'anglais "World Wide Web Consortium") pour permettre une meilleure accessibilité des personnes à déficience aux pages web, grâce notamment à l'utilisation possible de ces balises spécifiques par des dispositifs de synthèse vocale de texte, appelés dispositifs "text-to-speech" en anglais.

Enfin le serveur web SW comporte un module de traduction automatique de texte en langue des signes et un module d'animation d'un avatar. Ce module de traduction automatique fonctionne de la même façon que le module de traduction automatique dans le terminal T1 du premier mode de réalisation de l'invention et n'est donc pas détaillé dans ce deuxième mode de réalisation. Il produit en sortie une vidéo d'un avatar signant le texte fourni en entrée de ce module.

On suppose maintenant, dans ce deuxième mode de réalisation de l'invention, qu'un utilisateur du terminal T2, télécharge une page électronique hébergée par le serveur web SW. On suppose également, dans ce deuxième mode de réalisation de l'invention, que le navigateur du terminal T2 est capable d'exécuter les instructions de code contenues dans cette page électronique, par exemple qu'il est compatible avec JavaScript® ou Flex®. Le procédé de traduction selon l'invention est alors mis en oeuvre dans le serveur web SW, selon des étapes S1 à S6 représentées à la **figure 4****.**

L'étape S1 est l'envoi de la page électronique par le serveur web SW au terminal T2.

L'étape S2 est l'activation du procédé de traduction selon l'invention par le serveur web SW. Cette activation est effectuée à la réception d'une requête envoyée par le navigateur du terminal T2 au serveur web SW, par exemple une requête http générée par le code contenu dans la page électronique, suite à une action de l'utilisateur détectée par le navigateur. Il s'agit par exemple d'un clic sur un objet graphique spécifique affiché sur la page électronique, tel qu'un bouton d'action, une vidéo d'un avatar signant proposant une traduction automatique de zones de la page électronique en langue des signes, ou encore d'un mouvement prédéfini effectué par l'utilisateur du terminal T2 avec un curseur de ce terminal.

L'étape S3 est l'obtention d'au moins une donnée associée à une zone de la page électronique, cette zone ayant été détectée par le navigateur du terminal T2 en fonction de mouvements du curseur du terminal T2. Cette détection obéit à des instructions de code contenues dans la page électronique, dont l'exécution génère la détection par le navigateur du terminal T2, d'un passage surligné avec le curseur, ou d'une immobilisation prolongée du curseur au dessus ou à proximité d'une zone de la page électronique, ou encore de mouvements prolongés du curseur au dessus d'une zone de la page électronique. Cette détection permet au navigateur d'identifier une zone de la page électronique à traduire, qui correspond à une zone de texte ou à une image. Le navigateur transmet au serveur web SW, dans cette étape S3, soit une ou plusieurs données d'identification de la zone détectée, soit directement un texte à traduire correspondant à cette zone, par exemple un texte affiché dans cette zone, et/ou un texte inséré dans une balise spécifique associée à cette zone si celle-ci comporte une image.

L'étape suivante S4 est la traduction automatique, par le serveur web SW, d'un texte correspondant à la zone détectée à l'étape S3. Si la ou les données obtenues à l'étape S3 sont des données d'identification de cette zone, le serveur web SW obtient ce texte dans une base de données comportant, pour des zones de pages électroniques qu'il héberge, des textes à traduire associés à ces zones. Le serveur web SW envoie alors dans cette étape S4 le texte ainsi obtenu en entrée de son module de traduction automatique. Si au contraire la ou les données obtenues à l'étape S3 correspondent directement au texte à traduire pour la zone détectée à l'étape S3, le serveur web SW envoie directement ce texte en entrée de son module de traduction automatique.

L'étape S5 est l'obtention d'une vidéo en langue des signes correspondant à la traduction effectuée à l'étape S4. Cette vidéo est produite dynamiquement en parallèle à cette étape S4 de traduction. En effet, le module de traduction automatique du serveur web SW produit au fur et à mesure de la traduction du texte obtenu à l'étape S4 ou reçu à l'étape S3, les images d'une vidéo d'un avatar interprétant ce texte en langue des signes, grâce au module d'animation d'un avatar intégré au module de traduction automatique, de manière similaire à l'étape E3 du premier mode de réalisation de l'invention.

L'étape S6 est l'envoi de la vidéo ainsi obtenue à l'étape S5, au terminal T2. Cette étape est réalisée parallèlement à l'étape S5, la transmission de la vidéo étant réalisée en continu ou "streaming" en anglais. Le terminal T2 affiche, à la réception des images reçues au fur et à mesure en provenance du serveur web SW, la vidéo de l'avatar traduisant la zone détectée par le navigateur du terminal T2 à l'étape S3, par exemple dans une fenêtre en médaillon de la page électronique consultée.

Il est à noter que des variantes de réalisation de ce deuxième mode de réalisation sont envisageables, de manière similaire au premier mode de réalisation de l'invention. Par exemple en variante, dans l'étape de traduction automatique du procédé selon l'invention, une base de prises de vue prédéterminées correspondant à des traductions en langue des signes de mots ou d'expressions prédéterminées est utilisée pour produire la vidéo de traduction d'une zone de page électronique, au lieu du module d'animation d'un avatar. De plus, l'ordre des étapes du procédé de traduction selon l'invention n'est pas figé. Par exemple en variante les étapes S1 et S2 sont interverties, l'utilisateur du terminal T2 ayant manifesté auprès du serveur SW un besoin de traduction des pages qu'il souhaite consulter sur ce serveur, avant de naviguer sur une page électronique de ce serveur. L'étape S2 d'activation est par exemple dans cette variante réalisée par l'envoi d'une requête http spécifique, avant l'envoi d'une requête http de téléchargement de la page électronique.

## Revendications

1. Procédé de traduction d'une zone (Z) de page électronique en langue des signes, comportant une étape d'obtention (E3) d'une vidéo (V) en langue des signes correspondant à ladite zone (Z),
**caractérisé en ce que** ladite étape d'obtention (E3) d'une vidéo (V) est précédée d'une étape d'obtention (E1) d'au moins une donnée associée à ladite zone (Z), ladite zone (Z) ayant été détectée en fonction de mouvements d'un curseur (C).

2. Procédé de traduction selon la revendication 1, **caractérisé en ce que** ladite zone (Z) est détectée par des mouvements répétés dudit curseur (C) au dessus de ladite zone (Z), ou par une immobilisation dudit curseur (C) pendant au moins une durée prédéterminée au dessus ou à proximité de ladite zone (Z).

3. Procédé de traduction selon la revendication 1 ou 2, **caractérisé en ce que** ladite étape d'obtention (E1) d'au moins une donnée est précédée d'une étape d'activation dudit procédé de traduction, utilisant la détection d'au moins un mouvement prédéterminé dudit curseur (C) ou l'activation d'un objet graphique sur ladite page électronique.

4. Procédé de traduction selon l'une quelconque des revendications 1 à 3,
**caractérisé en ce que** ladite étape d'obtention (E3) d'une vidéo est précédée d'une étape (E2) de traduction dynamique en langue des signes d'un texte associé à ladite zone (Z), ladite étape (E2) de traduction résultant en un ensemble de signes, et ladite vidéo (V) étant construite dynamiquement lors de ladite étape d'obtention (E3) d'une vidéo par concaténation d'images prédéterminées, ladite concaténation formant visuellement ledit ensemble de signes.

5. Procédé de traduction selon l'une quelconque des revendications 1 à 4,
**caractérisé en ce que** ledit procédé étant implémenté dans un serveur web (SW) distant d'un terminal (T2) associé audit curseur, ladite étape d' obtention (S3) d'au moins une donnée est précédée d'une étape d'envoi (S1) de ladite page électronique audit terminal (T2), ladite page électronique comportant des instructions de code aptes à faire détecter sur ledit terminal (T2) ladite zone en fonction de mouvements dudit curseur, et à envoyer audit serveur web (SW) ladite au moins une donnée, et ladite étape d'obtention (S5) d'une vidéo est suivie d'une étape d'envoi (S6) de ladite vidéo audit terminal (T2).

6. Dispositif (T1) comportant des moyens de traduction d'une zone (Z) d'une page électronique en langue des signes, et des moyens d'obtention d'une vidéo (V) en langue des signes correspondant à ladite zone (Z), **caractérisé en ce qu'**il comporte en outre des moyens d'obtention d'au moins une donnée associée à ladite zone (Z), utilisant des moyens de détection de ladite zone (Z) en fonction de mouvements d'un curseur (C) sur un écran (E) d'un terminal (T1) affichant ladite page électronique.

7. Programme d'ordinateur comportant des instructions pour mettre en oeuvre le procédé selon l'une quelconque des revendications 1 à 5, lorsqu'il est exécuté sur un ordinateur.
